# EUROPEAN PATENT SPECIFICATION

(11) **EP 3 185 095 B1**
(45) Date of publication and mention of the grant of the patent: **29.12.2021**
(21) Application number: 15834569.4
(22) Date of filing: 10.08.2015
(51) Int. Cl.: A47L 9/30, A47L 9/28

(54) **AUTONOMOUS MOVING BODY**
AUTONOMER BEWEGLICHER KÖRPER
CORPS MOBILE AUTONOME

(30) Priority: 18.08.2014 JP 2014165905
(43) Date of publication of application: 28.06.2017
(73) Proprietor: Toshiba Lifestyle Products & Services Corporation, Kawasaki-shi, Kanagawa 210-8543 (JP)
(72) Inventor: IZAWA, Hirokazu, Kawasaki-shi Kanagawa 2108543 (JP); MARUTANI, Yuuki, Kawasaki-shi Kanagawa 2108543 (JP); WATANABE, Kota, Kawasaki-shi Kanagawa 2108543 (JP); FURUTA, Kazuhiro, Kawasaki-shi Kanagawa 2108543 (JP)
(74) Representative: Haseltine Lake Kempner LLP
(86) International application number: PCT/JP2015/072638
(87) International publication number: WO 2016/027719

(56) References cited:
- WO-A1-2013/085085
- JP-A- 2004 174 149
- JP-A- 2007 143 645
- JP-A- 2010 167 055
- JP-A- 2013 172 961
- JP-A- 2013 242 738
- US-A1- 2012 265 370
- US-A1- 2013 060 379

## Description

### FIELD

An embodiment of the present invention relates to an autonomous mobile apparatus.

### BACKGROUND

There is known an autonomous mobile apparatus adapted to autonomously move on a surface to be cleaned, for example a floor, and collect dust from the surface.

A conventional autonomous mobile apparatus includes a camera adapted to take static images such as photographs or moving images such as videos in a forward direction of the apparatus. The camera is placed on that side face (which corresponds to a front side) of a bilaterally symmetric body casing that faces the forward direction at a position displaced to the right from a symmetry line (center line in a front-rear direction) of the body casing. The mounting position of the camera, i.e., a position slightly to the right of the front side of the body casing, reduces blind spots of the camera to the right of the forward direction. With the camera placed in this way, the autonomous mobile apparatus can photograph an obstacle located closer, i.e., on a right side. Upon detecting or colliding with an obstacle, the autonomous mobile apparatus turns the body casing counterclockwise. Consequently, with turning itself, the autonomous mobile apparatus can photograph the obstacle on a left side located closer.

WO 2013/085085 relates to providing various interfaces allowing users to directly manipulate an automatic moving apparatus manually, thus enhancing user convenience and efficiency.

### Prior Art Documents

### Patent Documents

Patent Document 1: Japanese Patent Laid-Open No. 2013-146296

### SUMMARY

### Problems to be Solved by the Invention

The conventional autonomous mobile apparatus moves autonomously, for example, with detecting obstacles with an object sensor that uses infrared-rays. However, it is difficult for the conventional autonomous mobile apparatus to completely avoid collision of the body casing with the obstacle because a detection failure can occur depending on shape of the obstacle.

That is, some obstacle may collide with the front side of the body casing while the conventional autonomous mobile apparatus is advancing, the collision with the obstacle may break the camera placed on the front side of the body casing.

To solve the problems described above, it is an object of the present invention to provide an autonomous mobile apparatus that can reliably avoid breakage or damage of a camera.

### Means for Solving the Problems

To achieve the above object, an aspect of the present invention provides an autonomous mobile apparatus including: a casing; a running gear adapted to move the casing on a floor surface; a driving force source adapted to drive the running gear; a controller adapted to control the driving force source so that the casing autonomously moves on the floor surface; a bumper that is provided on a front side of the casing; and a camera unit disposed on a rear side of a side face of the casing to take a photograph an area behind the casing, wherein a photographing range of the camera unit includes an upper range provided above a horizontal direction, and a lower range provided below the horizontal direction when the casing is placed on the floor surface configured to be horizontal, and the upper range is wider than the lower range.

### Brief Description of the Drawings

Fig. 1 is a system configuration diagram showing an operation control system including an autonomous mobile apparatus according to an embodiment of the present invention.
Fig. 2 is a block diagram showing the autonomous mobile apparatus according to the embodiment of the present invention.
Fig. 3 is a perspective view showing the autonomous mobile apparatus according to the embodiment of the present invention as viewed obliquely from left front.
Fig. 4 is a perspective view showing the autonomous mobile apparatus according to the embodiment of the present invention as viewed obliquely from left back.
Fig. 5 is a perspective view showing a camera unit of the autonomous mobile apparatus according to the embodiment of the present invention.
Fig. 6 is a perspective view showing the camera unit of the autonomous mobile apparatus according to the embodiment of the present invention.
Fig. 7 is a perspective view showing the camera unit of the autonomous mobile apparatus according to the embodiment of the present invention.
Fig. 8 is a conceptual diagram showing a relationship between the camera unit and illuminator of the autonomous mobile apparatus according to the embodiment of the present invention.
Fig. 9 is a diagram showing an example of an image taken with the camera unit of the autonomous mobile apparatus according to the embodiment of the present invention.
Fig. 10 is a conceptual diagram showing another example of the relationship between the camera unit and illuminator of the autonomous mobile apparatus according to the embodiment of the present invention.

### Description of Embodiment

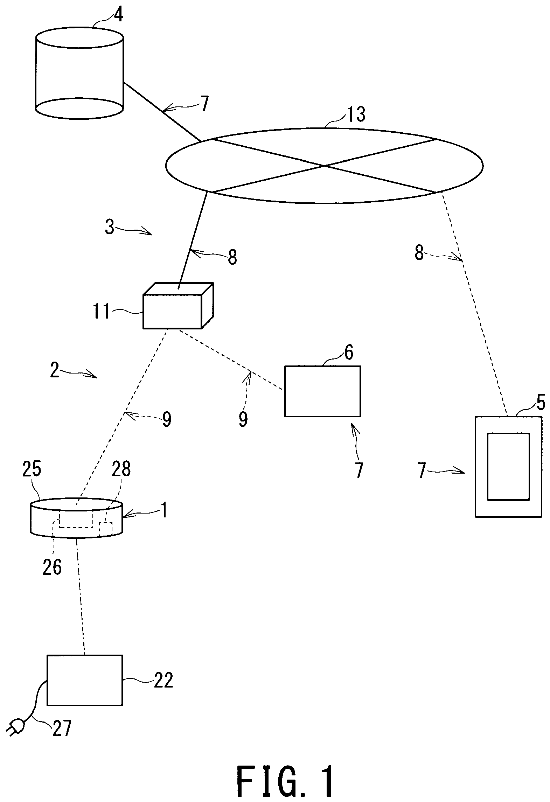

An embodiment of an autonomous mobile apparatus according to the present invention will be described with reference to Figs. 1 to 10.

Fig. 1 is a system configuration diagram showing an operation control system including the autonomous mobile apparatus according to the embodiment of the present invention.

As shown in Fig. 1, the autonomous mobile apparatus 1 according to the present embodiment is connected with the operation control system 2 in such a way as to be able to communicate.

The operation control system 2 exchanges communication signals that include an operation start command between the autonomous mobile apparatus 1 and a remote control terminal 5 with conducting bidirectional communication via a server 4 connected to a telecommunication network 3 in such a way as to be able to communicate. The operation control system 2 exchanges the communication signals that include the operation start command between a local terminal 6 and the autonomous mobile apparatus 1 with conducting bidirectional communication via the server 4 connected to the telecommunication network 3 in such a way as to be able to communicate. Note that the remote control terminal 5 and the local terminal 6 are generally termed as operation terminals 7.

The telecommunication network 3 includes an external network 8, a local area network 9 and a communication relay device 11 adapted to bidirectionally relay communication between the local area network 9 and the external network 8.

The local area network 9 is a wireless or wired telecommunication network including the communication relay device 11. The autonomous mobile apparatus 1 and the local terminal 6 are connected to the local area network 9 in such a way as to be able to communicate.

The external network 8 includes the Internet 13. The communication relay device 11, the server 4, and the remote control terminal 5 are connected to the Internet 13 via a public telephone network or a cellular network.

The server 4 intermediates information communication between the autonomous mobile apparatus 1 and the remote control terminal 5. The server 4 conducts communication with a large number of autonomous mobile apparatus 1 via the Internet 13. The server 4 gives an identifier to each of the large number of autonomous mobile apparatus 1. A user of the autonomous mobile apparatus 1 establishes bidirectional communication between the remote control terminal 5 and the autonomous mobile apparatus 1 at home using the identifier provided by the server 4.

The remote control terminal 5 is capable of conducting bidirectional communication with the server 4 with being connected to the Internet 13 via a public radio channel or a mobile telephone line. The remote control terminal 5 accepts input of operating commands such as a start cleaning operation command, a pause command, and a stop command for the autonomous mobile apparatus 1. Also, the remote control terminal 5 receives the communication signals for notifying the status of the autonomous mobile apparatus 1 such as Operating, Pausing, or Stopped from the server 4 and outputs the status of the autonomous mobile apparatus 1 to a screen.

The autonomous mobile apparatus 1 is a so-called robot cleaner. The autonomous mobile apparatus 1 moves autonomously all over a floor surface to be cleaned in a living room and collects dust. Also, the autonomous mobile apparatus 1 homes to a charging stand 22 after a cleaning operation and waits for a next cleaning operation. The autonomous mobile apparatus 1 detects a relative position of the charging stand 22 via infrared communication. The autonomous mobile apparatus 1 is covered with a flat body casing 25, specifically a hollow disk-shaped body casing 25. The autonomous mobile apparatus 1 moves autonomously with consuming electric power of a rechargeable battery 26 contained in the body casing 25.

The charging stand 22 is placed on the floor surface in the living room. The charging stand 22 can be connected and disconnected with the body casing 25. The charging stand 22 is provided with a power cable 27 adapted to lead electric power from a commercial alternating current power supply to the rechargeable battery 26 with the body casing 25 connected. The power cable 27 is a cable run adapted to transmit electricity to the rechargeable battery 26.

The autonomous mobile apparatus 1 includes a connection discriminating device 28 adapted to determine whether the body casing 25 is connected to the charging stand 22 so as to supply power to the rechargeable battery 26 via the power cable 27. The connection discriminating device 28 may be either a contact sensor or a non-contact sensor.

Next, the autonomous mobile apparatus 1 according to the embodiment of the present invention will be described in detail.

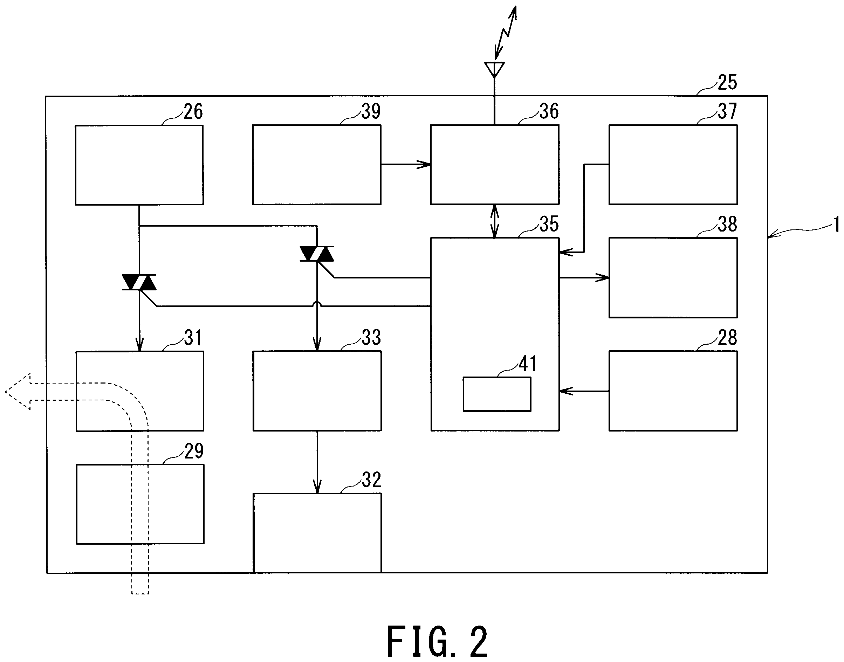

Fig. 2 is a block diagram showing the autonomous mobile apparatus according to the embodiment of the present invention.

As shown in Fig. 2, the autonomous mobile apparatus 1 according to the present embodiment includes the body casing 25, a dust container 29 provided in rear part of the body casing 25, an electric blower 31 housed in the body casing 25 and fluidly connected to the dust container 29, running gear 32 adapted to move the body casing 25 on the floor surface, a driving force source 33 adapted to drive the running gear 32, a robot controller 35 adapted to control the driving force source 33 so that the body casing 25 autonomously moves on the floor surface, a communication part 36 adapted to exchange the communication signals that includes the operation start command with the communication relay device 11, an input part 37 adapted to accept a user command directed to the robot controller 35, a notification unit 38 adapted to notify the user that the cleaning operation will be started when the robot controller 35 starts the cleaning operation upon receiving an operation start command included in the communication signals from the communication part 36, a camera unit 39 provided in the body casing 25, and the rechargeable battery 26 adapted to store electric power to be consumed by the electric blower 31, robot controller 35, driving force source 33, and camera unit 39.

The dust container 29 accumulates dust sucked through a suction port (not shown) under suction vacuum pressure generated by the electric blower 31. The dust container 29 is a separator adapted to accumulate dust with a filter adapted to filter out and collect dust or inertial separation such as centrifugal separation (cyclone separation) or separation by inertia force in a straight advance direction.

The electric blower 31 operates by consuming electric power of the rechargeable battery 26 and generates suction vacuum pressure.

The running gear 32 includes a pair of right and left driving wheels (not shown) fixed on a bottom face of the body casing 25 and a caster (not shown) fixed on the bottom face of the body casing 25.

The driving force source 33 includes a pair of electric motors connected to the corresponding the driving wheels, respectively. The driving force source 33 drives the right and left driving wheels independently of each other.

The communication part 36 receives the communication signals that include the operating command such as the start cleaning operation command, the pause command, or the stop command for the autonomous mobile apparatus 1 from the communication relay device 11, while transmits the communication signals for notifying the status of the autonomous mobile apparatus 1 such as Operating, Pausing, or Stopped.

The communication part 36 establishes a radio link with the communication relay device 11 and receives the communication signals that include the operating command for the autonomous mobile apparatus 1, while transmits the communication signals for notifying the status of the autonomous mobile apparatus 1.

The input part 37 may be, for example, electric switches provided on the body casing 25 or a remote controller adapted to transmit the operating commands to the robot controller 35 using infrared rays.

The rechargeable battery 26 is a power supply for the electric blower 31, driving force source 33, and robot controller 35 and stores electric power to be supplied to these components.

The notification unit 38 notifies the user and the people around the autonomous mobile apparatus 1 of a start of the cleaning operation using sounds such as voice or a warning beep or an optical indication such as lighting or blinking. Note that the notification unit 38 can also be used when the cleaning operation is started based on a timer process.

The camera unit 39 takes a static image such as a photograph or moving image such as a video, performs data processing on the photograph or the video, and outputs an image data to the communication part 36. The image data processed by the camera unit 39 is integrated in the communication signals by the communication part 36 and transmitted to the server 4 via the communication relay device 11. The image data recorded in the server 4 is received by the operation terminal 7, displayed, and presented to the user.

The robot controller 35 includes a microprocessor (not shown) and a storage device (not shown) adapted to store various arithmetic programs executed by the microprocessor and parameters. The robot controller 35 is electrically connected to the electric blower 31 and driving force source 33. The robot controller 35 controls the electric blower 31 and driving force source 33 according to specifics of commands acquired from the input part 37 and specifics of the operating commands acquired from the communication part 36 and performs cleaning.

Specifics of the operating commands executed by the robot controller 35 include the start cleaning operation command, the pause command, a resume cleaning operation command, and the stop command for the autonomous mobile apparatus 1. The robot controller 35 receives the specifics of the operating commands from the input part 37 or communication part 36. Note that the resume cleaning operation command is a command to resume cleaning operation suspended temporarily.

Also, the robot controller 35 includes a clock circuit 41. The robot controller 35 may execute the start cleaning operation command, the pause command, the resume cleaning operation command, and the stop command for the autonomous mobile apparatus 1 any time the user wants, using a timer process. The robot controller 35 can notify the local terminal 6 and remote control terminal 5 via the telecommunication network 3 from the communication part 36 that the timer process of, for example, the start cleaning operation command, the pause command, the resume cleaning operation command, and the stop command will be or has been performed.

Furthermore, the robot controller 35 transmits the communication signals containing information that the cleaning operation will be or has been started to the communication relay device 11 via the communication part 36 when starting a cleaning operation by receiving the operation start command included in the communication signals from the communication part 36. The communication signals containing information that the cleaning operation will be or has been started is transmitted to the local terminal 6 or the remote control terminal 5 that has specified remote control from the communication relay device 11 to notify the user that the cleaning operation has been started.

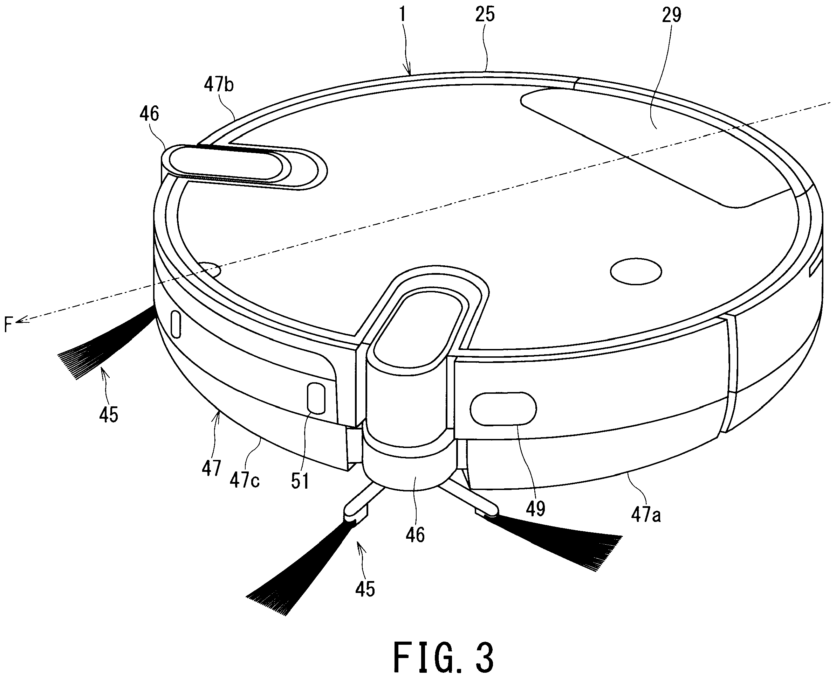

Fig. 3 is a perspective view showing the autonomous mobile apparatus according to the embodiment of the present invention as viewed obliquely from left front.

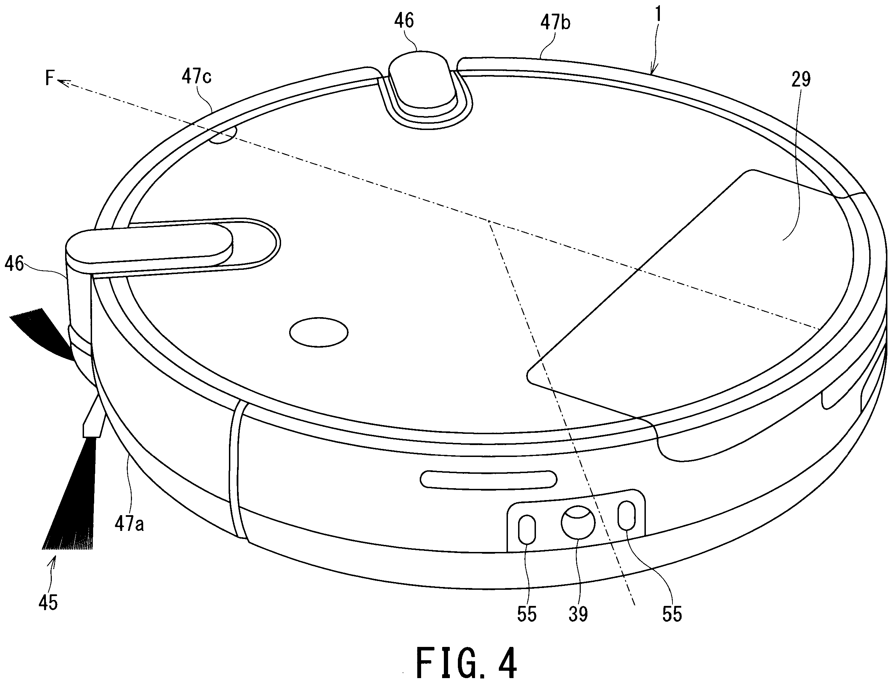

Fig. 4 is a perspective view showing the autonomous mobile apparatus according to the embodiment of the present invention as viewed obliquely from left back.

As shown in Figs. 3 and 4, the autonomous mobile apparatus 1 according to the present embodiment includes the body casing 25 shaped to be bilaterally symmetric with respect to a symmetry line (center line) running along a forward direction F, e.g., shaped like a disk.

Pair of right and left spinning side brushes 45 are provided in front part of the body casing 25, each extending in three directions toward a floor surface. The spinning side brushes 45 sweep the surface and lead dust to a suction port (inlet; not shown) opening in a bottom face of the body casing 25. Rotation centers of the spinning side brushes 45 are placed on the corresponding outer right and left sides of a projection region forward of the suction port. An electric motor (not shown) adapted to drive the spinning side brushes 45 are housed in a housing 46 advanceable and retractable in a radial direction of the body casing 25.

Of a peripheral surface of the body casing 25, a front half exposed in the forward direction is provided with a semi-arc-shaped bumper 47. The bumper 47 is adapted to cushion the body casing 25 from an obstacle colliding with the autonomous mobile apparatus 1 from ahead. The bumper 47 is divided into three segments by avoiding the housing 46 adapted to house the electric motor for the spinning side brushes 45.

A first object sensor 49 adapted to detect the obstacle using infrared-rays is buried in each of a left bumper 47a and right bumper 47b out of the three segments of the bumper 47.

A pair of right and left second object sensors 51 adapted to detect the obstacle using ultrasound is buried in a front bumper 47c out of the three segments of the bumper 47.

The camera unit 39 is installed on a side face on a rear side of the body casing 25 to photograph a rear view of the body casing 25.

Note that the side face of the body casing 25 refers to an outer wall surface of the body casing 25 extending in a height direction of the body casing 25 even if the body casing 25 in planar view has an oval disk shape other than a disk shape or has a polygonal shape such as a triangular or quadrangular shape. For example, the side face of the body casing 25 is a peripheral surface which annularly surrounds an entire circumference of the body casing 25 when the body casing 25 is disk-shaped, oval disk-shaped, or polygon-shaped. Also, the rear side of the side face of the body casing 25 refers to a part facing a direction (backward direction) opposite the forward direction F of the autonomous mobile apparatus 1 out of the peripheral surface of the body casing 25.

The camera unit 39 is arranged to offset to the right or left from the center line in a front-rear direction. Specifically, the camera unit 39 is placed around a center of figure of the body casing 25 in planar view by being shifted 45 degrees to the left from the backward direction. A shooting direction of the camera unit 39 in planar view, i.e., a shooting direction of the camera unit 39 in a horizontal plane, is similarly oriented in a direction inclined 45 degrees to the left from the backward direction. The placement of the camera unit 39 assumes that when running alongside a wall, the autonomous mobile apparatus 1 runs autonomously in such a way that a wall surfaces will normally be on the right of the autonomous mobile apparatus 1. That is, when the autonomous mobile apparatus 1 runs alongside a wall, the camera unit 39 is placed on a side opposite the wall surface, i.e., on the left side of the autonomous mobile apparatus 1. Whether to shift the camera unit 39 to the right or left depends on self-propulsion control of the autonomous mobile apparatus 1.

The autonomous mobile apparatus 1 includes illuminators 55 placed beside the camera unit 39 and adopted to illuminate a photographing range of the camera unit 39. A pair of the illuminators 55 are provided on right and left sides of the camera unit 39.

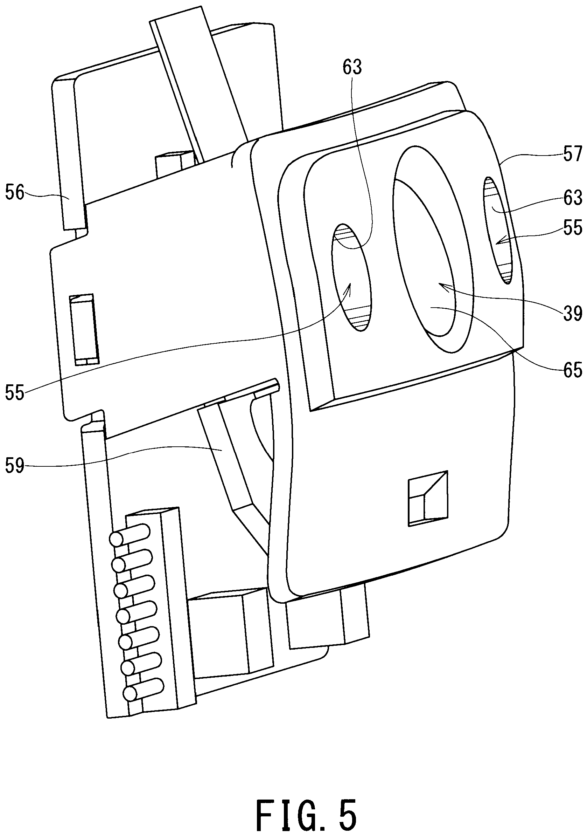

Figs. 5 to 7 are perspective views showing the camera part of the autonomous mobile apparatus according to the embodiment of the present invention.

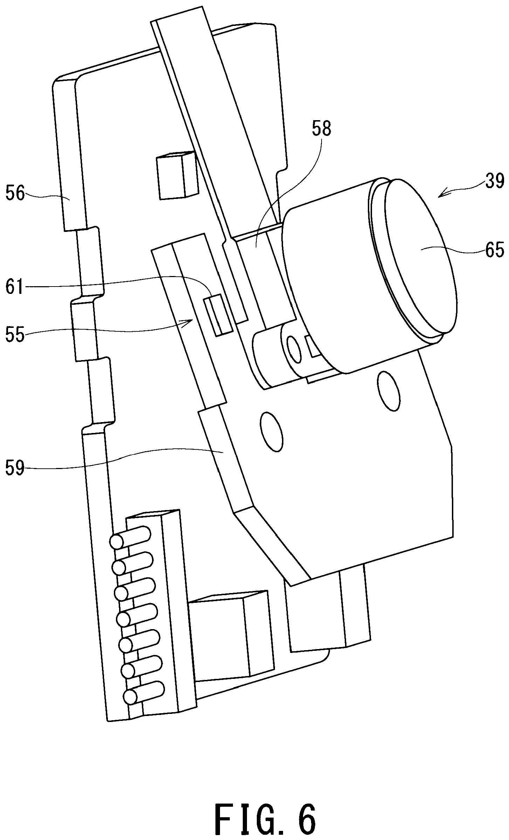

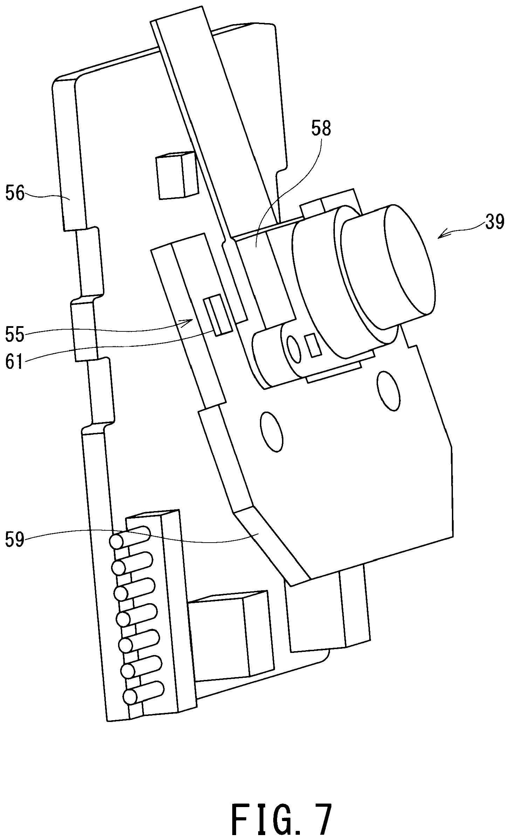

Note that a camera holder 57 of Fig. 5 is removed in Fig. 6. A lens cover 65 of Fig. 5 is removed in Fig. 7.

As shown in Figs. 5 to 7, the camera unit 39 of the autonomous mobile apparatus 1 according to the present embodiment includes a camera control circuit shaped like a plate and configured to extend in a vertical direction when the autonomous mobile apparatus 1 is placed in a horizontal surface to be cleaned, the camera holder 57 combined with the camera control circuit board 56, and a camera module 58 held by the camera holder 57 by being inclined with respect to the camera control circuit board 56.

The illuminators 55 includes a lighting circuit board 59 held by the camera holder 57 by being inclined with respect to the camera control circuit board 56 as with the camera module 58 and light emitting elements 61 installed on the lighting circuit board.

The camera control circuit board 56 is housed in the body casing 25.

The camera holder 57 extends in the form of a gate bridging between two sides of the camera control circuit board 56 extending in the vertical direction. Part of the camera holder 57 is exposed on the peripheral surface of the body casing 25, serving as part of an outer shell of the autonomous mobile apparatus 1. The exposed portion includes a camera window 62 adapted to allow light to reach the camera module 58, and an illumination window 63 adapted to illuminate the photographing range of the camera unit 39 with light emitted by the light emitting elements 61 of the illuminators 55.

The camera module 58 includes a semiconductor imaging element such as a Charge Coupled Device (CCD) or Complementary Metal Oxide Semiconductor (CMOS). The imaging element of the camera module 58 is protected by being covered with the lens cover 65.

The lighting circuit board 59 has a U shape spreading to the right and left of the camera module 58. The light emitting elements 61 are placed on the right and left of the camera module 58.

The light emitting element 61 is, for example, an Light Emitting Diode (LED) or organic ElectroLuminescence (EL) element.

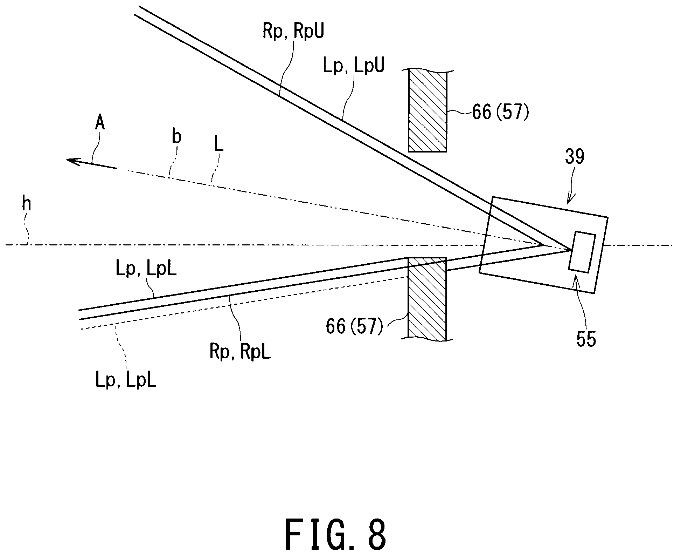

Fig. 8 is a conceptual diagram showing a relationship between the camera part and illuminators of the autonomous mobile apparatus according to the embodiment of the present invention. Note that Fig. 8 shows a relationship between the shooting direction A of the camera unit 39 and an optical axis L of the illuminators 55 in an up-down direction (vertical direction, vertical plane) of the autonomous mobile apparatus 1.

As shown in Fig. 8, the shooting direction A of the camera unit 39 of the autonomous mobile apparatus 1 according to the present embodiment is inclined upward with respect to a horizontal direction h when the body casing 25 is placed on a horizontal floor surface. Consequently, a photographing range Rp of the camera unit 39 includes an upper range RpU provided above the horizontal direction h and a lower range RpL provided below the horizontal direction h when the body casing 25 placed on a horizontal floor surface, and the upper range RpU is wider than the lower range RpL. Note that the shooting direction A of the camera unit 39 corresponds to a direction in which a bisector b of an angle of view α of the photographing range Rp extends.

A lighting coverage Lp of the illuminators 55 includes an upper coverage LpU provided above the horizontal direction h and a lower coverage LpL provided below the horizontal direction h when the body casing 25 placed on a horizontal floor surface, and the upper coverage LpU is wider than the lower coverage LpL.

The autonomous mobile apparatus 1 includes a shield 66 adapted to shield part of a spread of the lighting coverage LpL provided below the horizontal direction h of light emitted from the illuminators 55. The shield 66 is the camera holder 57. A lower end portion of the illumination window 63 shields part of the lower coverage LpL by being located toward the optical axis L.

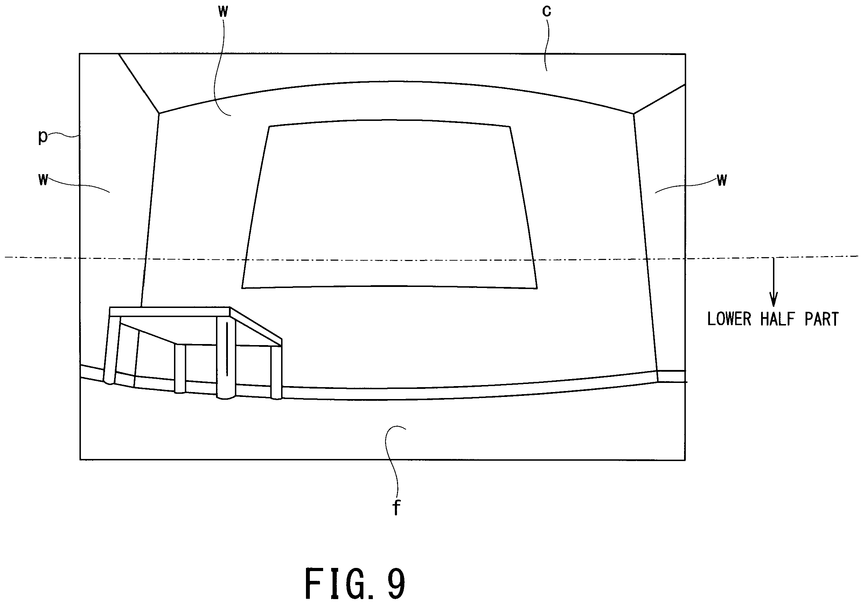

Fig. 9 is a diagram showing an example of an image taken by the camera part of the autonomous mobile apparatus according to the embodiment of the present invention.

The alternate long and short dash line in Fig. 9 is drawn in a center of the image p in the up-down direction. The image p is a photograph of a room where the autonomous mobile apparatus 1 is placed. The image p shows a ceiling portion c, three wall portions w, and a floor portion f.

As shown in Fig. 9, of the photographing range Rp of the image p taken by the camera unit 39 of the autonomous mobile apparatus 1 according to the present embodiment, the upper range RpU provided above the horizontal direction h is wider in spread than the lower range RpL provided below the horizontal direction h. Consequently, the floor portion f is fitted in an area below the center of the image p, i.e., in a small area at a bottom of a lower half of the image p. Such an image p allows a situation in a living room to be grasped easily.

If the shooting direction A of the camera unit 39 is oriented in the horizontal direction h, the lower half area of the image p is almost entirely occupied by the floor portion f. It is difficult to grasp the situation in the living room with such the image p.

That is, the image p taken by the autonomous mobile apparatus 1 according to the present embodiment contains less of the floor portion f, making it easy to grasp the situation in the living room. Consequently, the image p is suitable, for example, for keeping watch over an elderly person or monitoring a state of a pet remotely from the operation terminal 7.

Also, if a marker (not shown) adapted to guide the autonomous mobile apparatus 1 using infrared communication is placed, as with the charging stand 22, at any position where the user wants to take an image p, the user can easily guide the autonomous mobile apparatus 1 to a desired photo shooting location using homing control of the autonomous mobile apparatus 1 with the autonomous mobile apparatus 1 adapted to home to the charging stand 22 by moving in the backward direction. The autonomous mobile apparatus 1 can photograph in a direction of the marker using the camera unit 39 installed on a rear side of the body casing 25.

Furthermore, in the image p taken by the autonomous mobile apparatus 1 according to the present embodiment, the shield 66 adapted to shield part of the spread of the lower coverage LpL provided below the horizontal direction h out of the lighting coverage Lp of the illuminators 55 can reduce illuminance of the floor portion f and thereby avoid halation of the floor portion f. Upper part of the living room is illuminated more strongly than the floor portion f and photographed clearly.

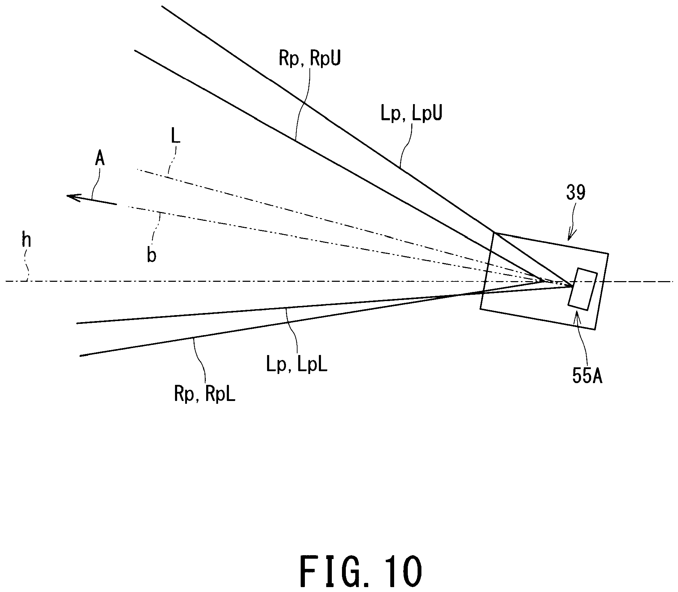

Fig. 10 is a conceptual diagram showing another example of the relationship between the camera part and illuminators of the autonomous mobile apparatus according to the embodiment of the present invention. Note that Fig. 10 shows the relationship between the shooting direction A of the camera unit 39 and an optical axis L of an illuminator 55A in the up-down direction (vertical direction) of the autonomous mobile apparatus 1.

As shown in Fig. 10, the optical axis L of the illuminator 55A of the autonomous mobile apparatus 1 according to the present embodiment is inclined upward with respect to the horizontal direction h when the body casing 25 is placed on the horizontal floor surface. The optical axis L of the illuminator 55A is inclined more greatly than the shooting direction A of the camera unit 39.

For example, an inclination of the optical axis L of the illuminator 55A with respect to the horizontal direction h is set to around 20 degrees when an inclination of the shooting direction A of the camera unit 39 is 15 degrees.

The autonomous mobile apparatus 1 according to the present embodiment is equipped with the camera unit 39 adapted to take the photograph an area behind the body casing 25 with being disposed on the rear side of the body casing 25. Consequently, compared to the conventional autonomous mobile apparatus that includes the camera unit 39 disposed on a front side, the autonomous mobile apparatus 1 can reduce the possibility that the camera unit 39 will collide with obstacles such as walls or furniture and thereby avoid risks such as breakage or damage of the camera unit 39.

The autonomous mobile apparatus 1 according to the present embodiment includes the camera unit 39 arranged to offset to the right or left from the center line of the body casing 25 in the front-rear direction. Consequently, the autonomous mobile apparatus 1 can reduce the possibility that the camera unit 39 will collide with the obstacle located directly behind and thereby avoid risks such as breakage or damage of the camera unit 39 even if it becomes necessary to move backward in the course of autonomous travel.

The autonomous mobile apparatus 1 according to the present embodiment is configured such that of the photographing range Rp of the camera unit 39, the upper range RpU provided above the horizontal direction h is wider than the lower range RpL provided below the horizontal direction h. Consequently, with the autonomous mobile apparatus 1, the floor portion f is fitted in a small area at the bottom of the lower half of the image p produced by the camera unit 39, allowing the situation in the living room to be grasped easily.

The autonomous mobile apparatus 1 according to the present embodiment includes the illuminators 55 and 55A placed beside the camera unit 39 and adopted to illuminate a photographing range Rp of the camera unit 39. Consequently, the autonomous mobile apparatus 1 can receive an image p even if it is dark in the living room.

The autonomous mobile apparatus 1 according to the present embodiment includes the illuminators 55 and 55A, of which the upper coverage LpU provided above the horizontal direction h is wider than the lower coverage LpL provided below the horizontal direction h. Consequently, the autonomous mobile apparatus 1 can reduce halation in the images taken by the camera unit 39.

The autonomous mobile apparatus 1 according to the present embodiment includes the illuminators 55 and 55A provided with the optical axis L inclined upward with respect to the horizontal direction h. Consequently, the autonomous mobile apparatus 1 can take a high-visibility image p with reduced halation in the floor portion f and suitable illumination in the living room.

The autonomous mobile apparatus 1 according to the present embodiment includes the illuminator 55A, of which the optical axis L is inclined more greatly than is the shooting direction A of the camera unit 39. Consequently, the autonomous mobile apparatus 1 can take a high-visibility image p with still less halation in the floor portion f and more suitable illumination in the living room.

The autonomous mobile apparatus 1 according to the present embodiment includes the shield 66 adapted to shield part of the spread of the lower coverage LpL provided below the horizontal direction h. Consequently, the autonomous mobile apparatus 1 can take a high-visibility image p with still less halation in the floor portion f and more suitable illumination in the living room.

Therefore, the autonomous mobile apparatus 1 according to the present embodiment can reliably avoid breakage or damage of a camera.

While certain embodiment has been described, this embodiment has been presented by way of example only, and is not intended to limit the scope of the inventions. Indeed, the novel embodiment described herein may be embodied in a variety of other forms; furthermore, various omissions, substitutions and changes in the form of the embodiment described herein may be made without departing from the spirit of the inventions. The accompanying claims and their equivalents are intended to cover such forms or modifications as would fall within the scope and spirit of the inventions.

### Reference Signs List

- 1: Autonomous mobile apparatus
- 2: Operation control system
- 3: Telecommunication network
- 4: Server
- 5: Remote control terminal
- 6: Local terminal
- 7: Operation terminal
- 8: External network
- 9: Local area network
- 11: Communication relay device
- 13: Internet
- 22: Charging stand
- 25: Body casing
- 26: Rechargeable battery
- 27: Power cable
- 28: Connection discriminating device
- 29: Dust container
- 31: Electric blower
- 32: Running gear
- 33: Driving force source
- 35: Robot controller
- 36: Communication part
- 37: Input part
- 38: Notification unit
- 39: Camera unit
- 41: Clock circuit
- 45: Spinning side brush
- 46: Housing
- 47: Bumper
- 47a: Left bumper
- 47b: Right bumper
- 47c: Front bumper
- 49: First object sensor
- 51: Second object sensor
- 55,: 55A Illuminator
- 56: Camera control circuit board
- 57: Camera holder
- 58: Camera module
- 59: Lighting circuit board
- 61: Light emitting element
- 62: Camera window
- 63: Illumination window
- 65: Lens cover
- 66: Shield

## Claims

1. An autonomous mobile apparatus (1) comprising:
a casing (25);
a running gear (32) adapted to move the casing (25) on a floor surface;
a driving force source (33) adapted to drive the running gear (32);
a controller (35) adapted to control the driving force source (33) so that the casing (25) autonomously moves on the floor surface;
a bumper (47) that is provided on a front side of the casing (25); and
a camera unit (39) disposed on a rear side of a side face of the casing (25) to take a photograph an area behind the casing (25),
wherein a photographing range (Rp) of the camera unit (39) includes an upper range (RpU) provided above a horizontal direction (h), and a lower range (RpL) provided below the horizontal direction (h) when the casing (25) is placed on the floor surface configured to be horizontal, and the upper range (RpU) is wider than the lower range (RpL).

2. The autonomous mobile apparatus (1) according to claim 1, wherein the camera unit (39) is arranged to offset to either right or left from a center line of the casing (25) in a front-rear direction.

3. The autonomous mobile apparatus (1) according to any one of claims 1 or 2, further comprising an illuminator (55, 55A) placed beside the camera unit (39) and adopted to illuminate a photographing range (Rp) of the camera unit (39).

4. The autonomous mobile apparatus (1) according to claim 3, wherein a lighting coverage of the illuminator (55, 55A) includes an upper coverage (LpU) provided above a horizontal direction (h), and a lower coverage (LpL) provided below the horizontal direction (h) when the casing (25) is placed on the floor surface configured to be horizontal, and the upper coverage (LpU) is wider than the lower coverage (LpL).

5. The autonomous mobile apparatus (1) according to claim 3 or 4, wherein when the casing (25) is placed on the floor surface configured to be horizontal, an optical axis (L) of the illuminator (55, 55A) is inclined upward with respect to the horizontal direction (h).

6. The autonomous mobile apparatus (1) according to any one of claims 3 to 5, wherein an optical axis (L) of the illuminator (55, 55A) is inclined more greatly than a shooting direction (A) of the camera unit (39).

7. The autonomous mobile apparatus (1) according to claim 4, further comprising a shield (66) adapted to shield part of a spread of the lighting coverage provided below the horizontal direction (h) of light emitted from the illuminator (55, 55A).

## Patentansprüche

1. Autonomes mobiles Gerät (1), umfassend: ein Gehäuse (25);
ein Fahrwerk (32), das angepasst ist, um das Gehäuse (25) auf einer Bodenfläche zu bewegen;
eine Antriebskraftquelle (33), die angepasst ist, um das Fahrwerk (32) anzutreiben;
eine Steuerung (35), die angepasst ist, um die Antriebskraftquelle (33) zu steuern, sodass sich das Gehäuse (25) autonom auf der Bodenoberfläche bewegt;
einen Stoßfänger (47), der an einer Vorderseite des Gehäuses (25) bereitgestellt ist; und
eine Kameraeinheit (39), die an einer Rückseite einer Seitenfläche des Gehäuses (25) angeordnet ist, um einen Bereich hinter dem Gehäuse (25) zu fotografieren,
wobei ein Aufnahmebereich (Rp) der Kameraeinheit (39) einen oberen Bereich (RpU) beinhaltet, der oberhalb einer horizontalen Richtung (h) bereitgestellt ist, und einen unteren Bereich (RpL), der unterhalb der horizontalen Richtung (h) bereitgestellt ist, wenn das Gehäuse (25) auf der Bodenoberfläche platziert ist, die konfiguriert ist, um horizontal zu sein, und der obere Bereich (RpU) breiter ist als der untere Bereich (RpL).

2. Autonomes mobiles Gerät (1) gemäß Anspruch 1, wobei die Kameraeinheit (39) angeordnet ist, um entweder nach rechts oder links von einer Mittellinie des Gehäuses (25) in einer Richtung von vorne nach hinten versetzt zu sein.

3. Autonomes mobiles Gerät (1) gemäß einem der Ansprüche 1 oder 2, ferner umfassend eine Beleuchtungseinrichtung (55, 55A), die neben der Kameraeinheit (39) platziert ist und angepasst ist, um einen Aufnahmebereich (Rp) der Kameraeinheit (39) zu beleuchten.

4. Autonomes mobiles Gerät (1) gemäß Anspruch 3, wobei eine Beleuchtungsabdeckung der Beleuchtungseinrichtung (55, 55A) eine obere Abdeckung (LpU), die oberhalb einer horizontalen Richtung (h) bereitgestellt ist, und eine untere Abdeckung (LpL), die unterhalb der horizontalen Richtung (h) bereitgestellt ist, beinhaltet, wenn das Gehäuse (25) auf der Bodenoberfläche platziert ist, die konfiguriert ist, um horizontal zu sein, und die obere Abdeckung (LpU) breiter ist als die untere Abdeckung (LpL).

5. Autonomes mobiles Gerät (1) gemäß Anspruch 3 oder 4, wobei, wenn das Gehäuse (25) auf der Bodenoberfläche platziert ist, die konfiguriert ist, um horizontal zu sein, eine optische Achse (L) der Beleuchtungseinrichtung (55, 55A) in Bezug auf die horizontale Richtung (h) nach oben geneigt ist.

6. Autonomes mobiles Gerät (1) gemäß einem der Ansprüche 3 bis 5, wobei eine optische Achse (L) der Beleuchtungseinrichtung (55, 55A) stärker geneigt ist als eine Aufnahmerichtung (A) der Kameraeinheit (39).

7. Autonomes mobiles Gerät (1) gemäß Anspruch 4, ferner umfassend eine Abschirmung (66), die angepasst ist, um einen Teil einer Ausbreitung der Beleuchtungsabdeckung abzuschirmen, die unterhalb der horizontalen Richtung (h) des von der Beleuchtungseinrichtung (55, 55A) emittierten Lichts bereitgestellt ist.

## Revendications

1. Un appareil mobile autonome (1) comprenant :
un boîtier (25) ;
un train de roulement (32) adapté pour déplacer le boîtier (25) sur une surface de sol ;
une source de force d'entraînement (33) adaptée pour entrainer le train de roulement (32) ;
un contrôleur (35) adapté pour commander la source de force d'entraînement (33) de sorte que le boîtier (25) se déplace de manière autonome sur la surface du sol ;
un pare-chocs (47) qui est prévu sur un côté avant du boîtier (25) ; et
une unité de caméra (39) disposée sur un côté arrière d'une face latérale du boîtier (25) pour prendre une photographie d'une zone derrière le boîtier (25),
dans lequel une plage de photographie (Rp) de l'unité de caméra (39) comprend une plage supérieure (RpU) fournie au-dessus d'une direction horizontale (h), et une plage inférieure (RpL) fournie en dessous de la direction horizontale (h) lorsque le boîtier (25) est placé sur la surface du sol configuré pour être horizontal, et la plage supérieure (RpU) est plus large que la plage inférieure (RpL).

2. L'appareil mobile autonome (1) selon la revendication 1, dans lequel l'unité de caméra (39) est agencée pour se décaler vers la droite ou la gauche à partir d'une ligne centrale du boîtier (25) dans une direction avant-arrière.

3. L'appareil mobile autonome (1) selon l'une quelconque des revendications 1 ou 2, comprenant en outre un illuminateur (55, 55A) placé à côté de l'unité de caméra (39) et conçu pour illuminer une plage de photographie (Rp) de l'unité de caméra (39).

4. L'appareil mobile autonome (1) selon la revendication 3, dans lequel une couverture d'éclairage de l'illuminateur (55, 55A) comprend une couverture supérieure (LpU) fournie au-dessus d'une direction horizontale (h), et une couverture inférieure (LpL) fournie en dessous de la direction horizontale (h) lorsque le boîtier (25) est placé sur la surface du sol configuré pour être horizontal, et la couverture supérieure (LpU) est plus large que la couverture inférieure (LpL).

5. L'appareil mobile autonome (1) selon la revendication 3 ou 4, dans lequel lorsque le boîtier (25) est placé sur la surface du sol configuré pour être horizontal, un axe optique (L) de l'illuminateur (55, 55A) est incliné vers le haut par rapport à la direction horizontale (h).

6. L'appareil mobile autonome (1) selon l'une quelconque des revendications 3 à 5, dans lequel un axe optique (L) de l'illuminateur (55, 55A) est incliné plus considérablement qu'une direction de prise de vue (A) de l'unité de caméra (39).

7. L'appareil mobile autonome (1) selon la revendication 4, comprenant en outre un écran (66) adapté pour faire écran à une partie d'une propagation de la couverture d'éclairage fournie sous la direction horizontale (h) de la lumière émise par l'illuminateur (55, 55A).
